# EUROPEAN PATENT APPLICATION

(11) **EP 4 702 898 A1**
(43) Date of publication of application: **04.03.2026**
(21) Application number: 25190832.3
(22) Date of filing: 21.07.2025
(51) Int. Cl.: A47J 43/046, A47J 43/07

(54) **BLENDER WITH VACUUM CARTRIDGE**

(30) Priority: 27.08.2024 KR 20240115129
(71) Applicant: NUC Electronics Co., Ltd., Daegu 41548 (KR)
(72) Inventor: KIM, Jong Boo, 41548 DAEGU (KR)
(74) Representative: Cabinet Beau de Loménie

(57) **Abstract**

Disclosed is a blender with a vacuum cartridge. The blender can prevent noise and can prevent a vacuum pump from failing or malfunctioning due to foreign matter.

## Description

### TECHNICAL FIELD

Embodiments of the present disclosure relate to a blender with a vacuum cartridge that can prevent noise and can prevent a vacuum pump from failing or malfunctioning due to foreign matter.

### BACKGROUND

In general, a blender refers to a device configured to grind a food material (such as fruit or grain) using a rotatable blade disposed at a lower portion of a blender container receiving the food material therein.

However, during grinding through rotation of the rotatable blade at high speed, the food material comes into contact with air, thereby causing deterioration in freshness of the food material due to generation of a lot of bubbles and oxidation.

To solve this problem, a vacuum blender configured to grind a food material under vacuum has been developed in the art.

The vacuum blender is provided with a vacuum pump to prevent bubble generation and oxidation by allowing the food material to be blended in a vacuum state of the blender container.

However, the vacuum blender has a problem of foreign matter become trapped in a vacuum hose, causing contamination of the vacuum hose and malfunction of the vacuum pump.

In order to address these problems, Korean Patent Registration No. 10-2488655 (January 13, 2023) provides a vacuum blender in which a chamber is provided to a handle of a blender container such that foreign matter generated during vacuum blending can be accumulated in a chamber space to solve the problems caused by the foreign matter.

However, since a lid of the vacuum blender is formed with a suction hole to interlock with the chamber of the handle, this vacuum blender has problems of a complicated lid structure, increase in weight of the container, and direct suction of foreign matter remaining in the lid during vacuum blending.

Moreover, in a structure wherein the lid and the container, which are frequently washed by a user, are formed with an anti-foreign matter structure, there is a problem in that foreign matter can remain or water stains can be generated when the lid and the container are not completely dried, thereby causing a vacuum error.

### <Related Literature>

### <Patent Document>

Korean Patent Registration No. 10-1804162 (December 4, 2017)
Korean Patent Registration No. 10-2488655 (January 13, 2023)

### SUMMARY

It is an aspect of the present disclosure to provide a blender that includes a detachable vacuum cartridge formed on a side surface of a noise cover to prevent noise while preventing a vacuum pump from failing or malfunctioning due to foreign matter.

In accordance with one aspect of the present disclosure, a blender with a vacuum cartridge includes: a body provided with a motor for providing drive force and a vacuum pump for suctioning air; a container detachably coupled to the body and having a blade rotatably mounted thereon; a noise cover detachably coupled to an upper end of the body and configured to surround the container and to prevent noise, the noise cover being provided with an air distribution unit; and a vacuum cartridge detachably coupled to a side surface of the noise cover and provided at an upper end thereof with a cap, wherein air discharged from the container is delivered to the vacuum cartridge, foreign matter is delivered to the vacuum cartridge and received therein, and clean air is circulated to the vacuum pump.

In one embodiment, the noise cover may include a first vacuum tube, a second vacuum tube, and a third vacuum tube; the air distribution unit may be disposed between the noise cover and the vacuum cartridge; and air discharged from the container is delivered to the air distribution unit through the first vacuum tube and is then delivered to the vacuum cartridge through a first discharge hole of the air distribution unit, foreign matter is then delivered to the vacuum cartridge, and clean air is then suctioned through a first suction hole of the air distribution unit and circulated to the vacuum pump through the third vacuum tube.

In one embodiment, the noise cover may further include a second vacuum tube connected to a suction hole of the air distribution unit; and a vacuum gauge connected to the second vacuum tube and configured to detect the presence of a vacuum.

In one embodiment, the cap provided to the upper end of the vacuum cartridge may be formed with a second discharge hole connected to the first discharge hole of the air distribution unit and a second suction hole connected to the first suction hole of the air distribution unit; and a prevention plate may be disposed between the second discharge hole and the second suction hole, and may be configured to prevent air from directly flowing from the second discharge hole of the cap to the second suction hole thereof while reducing a flow rate and pressure of air.

In one embodiment, the vacuum cartridge and the cap provided to the upper end of the vacuum cartridge may be formed with a recess corresponding to a shape of the third vacuum tube when coupled to the noise cover; and the third vacuum tube may be received in the recess to be coupled thereto.

In one embodiment, the vacuum cartridge may be formed with a coupling portion to be detachably coupled to a lower end of the noise cover in a latch-hook manner; and the noise cover may be provided with a hook portion by which the coupling portion of the vacuum cartridge is caught.

In one embodiment, the vacuum cartridge may be formed of a transparent or translucent material to allow a user to observe the interior of the vacuum cartridge.

In one embodiment, the vacuum cartridge may be provided therein with a water level sensor to measure a water level.

In one embodiment, the third vacuum tube may be detachable from the noise cover for cleaning.

In one embodiment, the third vacuum tube may be detachably received in the vacuum cartridge and may be detachable from the vacuum cartridge for cleaning.

In one embodiment, any or all of the body, the noise cover, and the vacuum cartridge may be provided with a pressure sensor to control operation of the motor and the vacuum pump in response to change in vacuum pressure caused by foreign matter.

In one embodiment, the noise cover may be provided with a trap member to control air flow such that the air suctioned from the container does not directly flow into the vacuum tube.

In one embodiment, the trap member may include a plurality of ribs to allow the foreign matter to be returned to the container through reduction in flow rate and pressure of air by directing the air flow in at least one direction.

The present invention has an advantage that includes a detachable vacuum cartridge formed on a side surface of a noise cover to prevent noise while preventing a vacuum pump from failing or malfunctioning due to foreign matter.

### BRIEF DESCRIPTION OF THE DRAWINGS

The above and other aspects, features, and advantages of the present disclosure will become apparent from the detailed description of the following embodiments in conjunction with the accompanying drawings:
FIG. 1 is a perspective view of a blender with a vacuum cartridge according to the present disclosure;
FIG. 2 is an exploded perspective view of the blender with the vacuum cartridge according to the present disclosure;
FIG. 3 is perspective views of the blender with the vacuum cartridge according to the present disclosure, with the vacuum cartridge detached from the blender and with the vacuum cartridge coupled thereto;
FIG. 4 is a side cross-sectional view of the blender with the vacuum cartridge according to the present disclosure in an assembled state;
FIG. 5 is a partially enlarged view of Part A of FIG. 4;
FIG. 6 is a diagram illustrating airflow under vacuum in the blender with the vacuum cartridge according to the present disclosure;
FIG. 7 is a diagram schematically illustrating a connection configuration of a vacuum tube and the vacuum cartridge in the blender according to the present disclosure;
FIG. 8 to FIG. 10 are views of the vacuum cartridge of the blender according to the present disclosure; and
FIG. 11 is a view of the vacuum tube and the vacuum cartridge in a coupled state in the blender according to the present disclosure.

### DETAILED DESCRIPTION OF EMBODIMENTS

Hereinafter, exemplary embodiments of the present disclosure will be described in detail with reference to the accompanying drawings. It should be understood that the following embodiments are given by way of illustration to provide a thorough understanding of the present disclosure to those skilled in the art and the present disclosure is not limited to the following embodiments and may be embodied in different ways by those skilled in the art.

The terminology used herein is for the purpose of describing particular embodiments and is not intended to be limiting. Moreover, the terms "comprises," "comprising," "includes," and/or "including," when used in this specification, specify the presence of stated features, integers, steps, operations, elements, components, and/or groups thereof, but do not preclude the presence or addition of one or more other features, integers, steps, operations, elements, components, and/or groups thereof. As used herein, the singular forms, "a," "an," and "the" are intended to include the plural forms as well, unless the context clearly indicates otherwise.

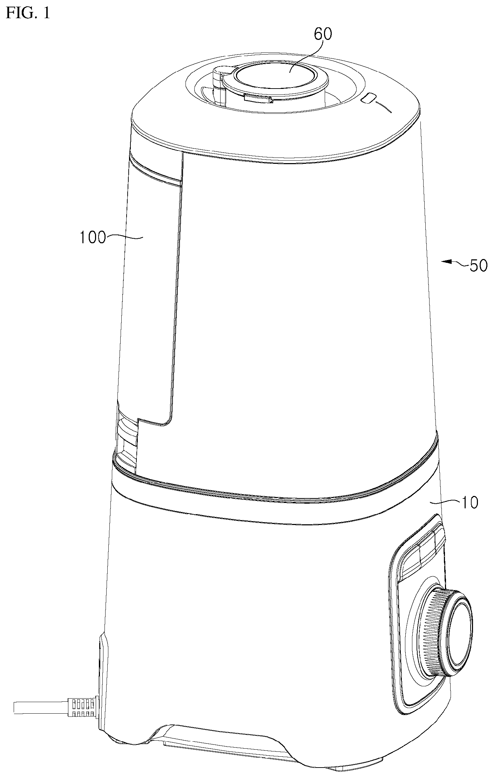

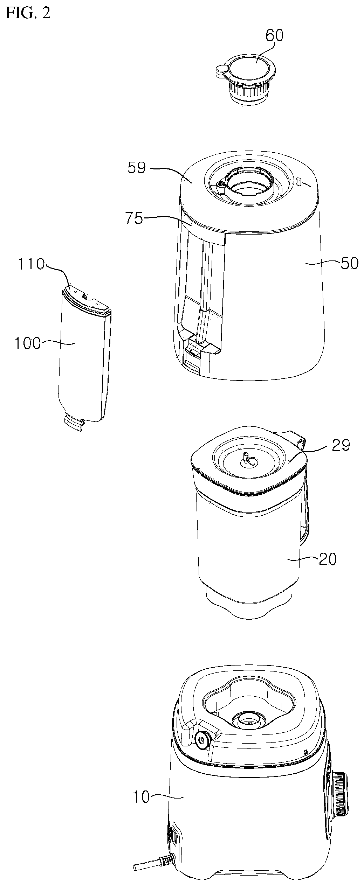

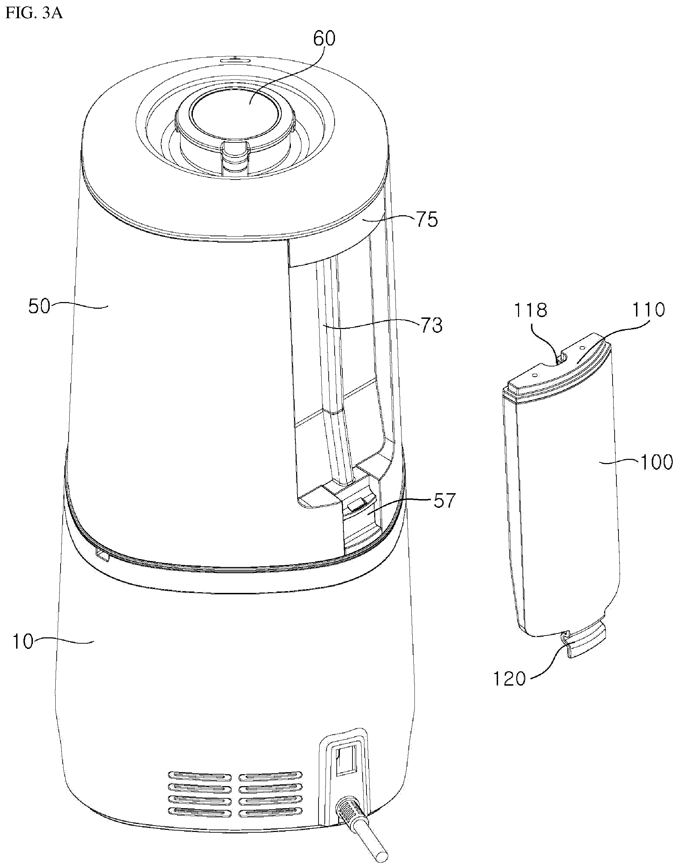

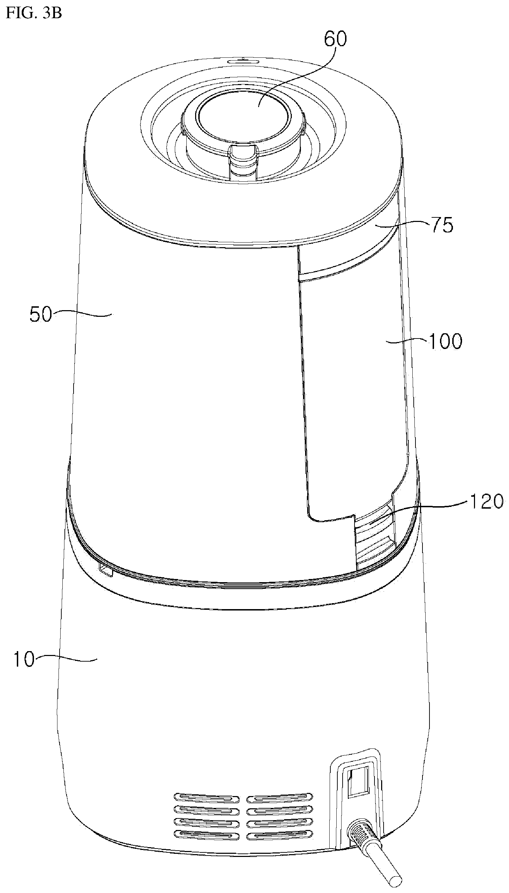

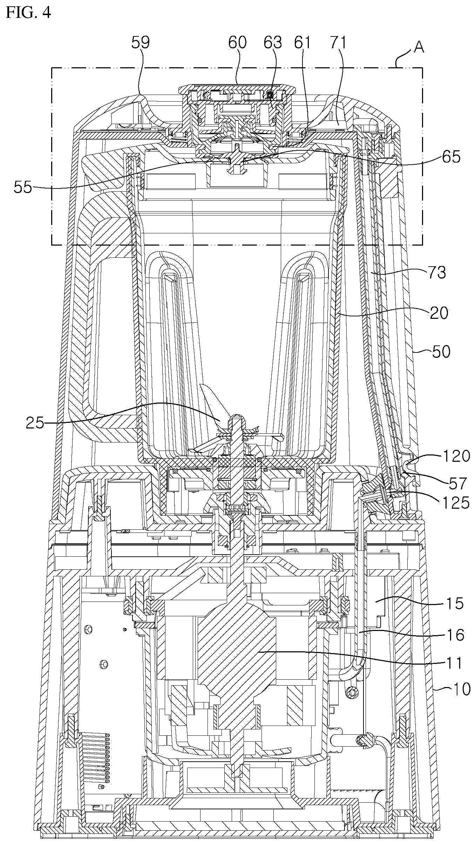

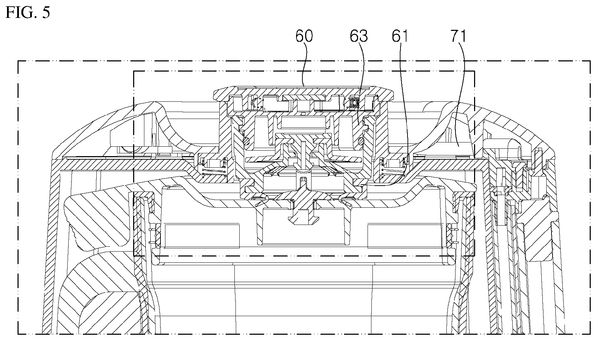

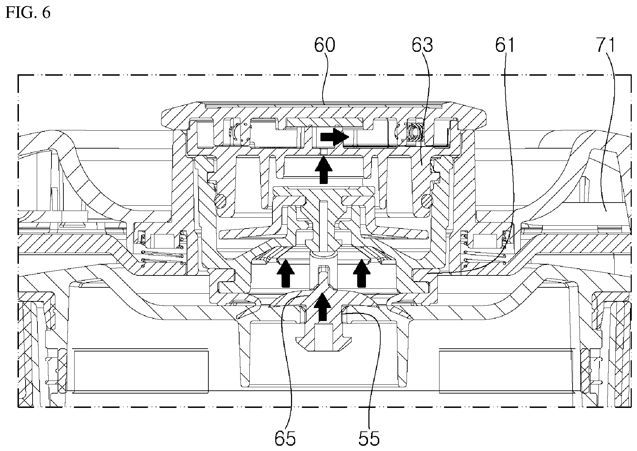

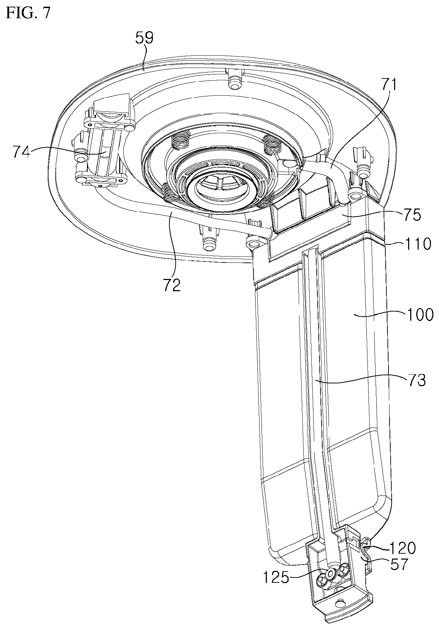

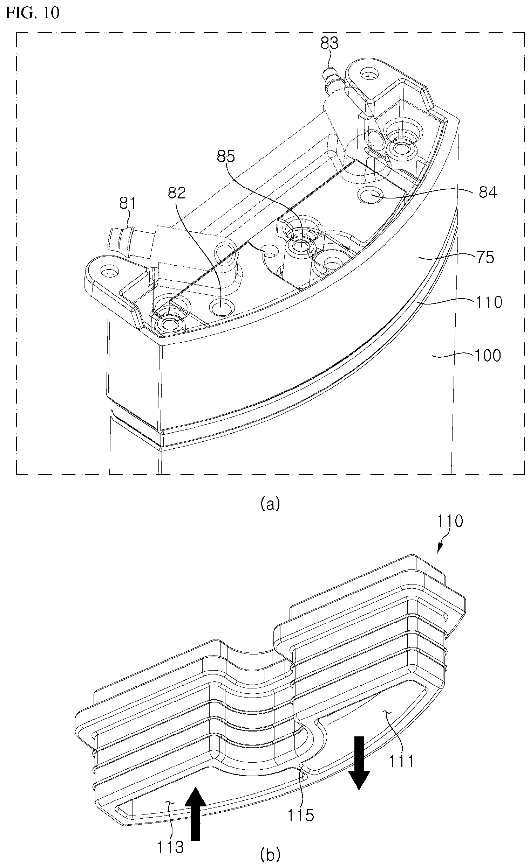

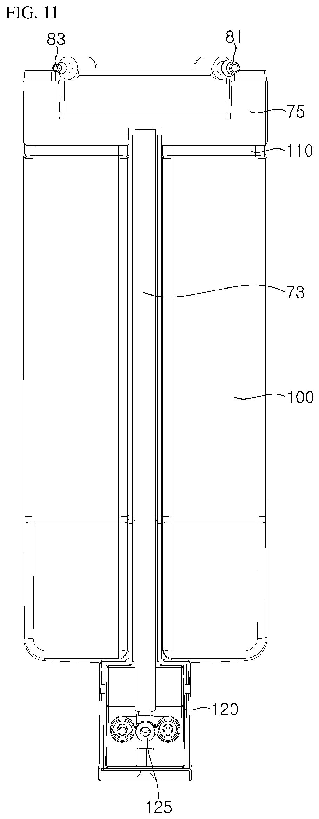

Referring to FIG. 1 to FIG. 11, a blender with a vacuum cartridge according to the present disclosure will be described.

The blender according to the present disclosure includes: a body 10 provided with a motor 11 for providing drive force and a vacuum pump 15 for suctioning air; a container 20 detachably coupled to the body 10 and having a blade 25 rotatably mounted on the bottom of the container 20 and a container lid 29 air-tightly mounted on an opening of the container 20 at an upper or lower side thereof; a noise cover 50 detachably coupled to an upper end of the body 10 and configured to surround the container 20 and to prevent noise, the noise cover 50 being provided with an air distribution unit 75; and a vacuum cartridge 100 detachably coupled to a side surface of the noise cover 50 and provided at an upper end thereof with a cap 110.

Specifically, referring to FIG. 1 to FIG. 7, the noise cover 50 may be provided with a first vacuum tube 71, a second vacuum tube 72, and a third vacuum tube 73.

The air distribution unit 75 may be disposed between the noise cover 50 and the vacuum cartridge 100 to distribute air suctioned from the container and air discharged from the vacuum cartridge.

In addition, after the air discharged from the container 20 is delivered to the air distribution unit 75 through the first vacuum tube 71 and is then delivered to the vacuum cartridge 100 through the first discharge hole 82 of the air distribution unit 75, foreign matter may be delivered to the vacuum cartridge 100 and received therein and clean air may be suctioned through the first suction hole 84 of the air distribution unit 75 and circulated to the vacuum pump 15 through the third vacuum tube 73.

The vacuum cartridge 100 may be formed to be detachably coupled to the side surface of the noise cover 50 to simultaneously realize a function of preventing noise and a function of preventing the vacuum pump 15 from failing or malfunctioning due to foreign matter.

Although the vacuum cartridge 100 is disposed on the side surface of the noise cover 50 in the above embodiment, the vacuum cartridge 100 may be coupled to an upper end of the noise cover 50 or to the main body 10.

The noise cover 50 may further include a second vacuum tube 72 connected to the first suction hole 84 of the air distribution unit 75 and a vacuum gauge 74 connected to the second vacuum tube 72 and configured to detect the presence of a vacuum.

Accordingly, the air distribution unit 75 may be connected to the first vacuum tube 71 through a first connecting portion 81 to allow air suctioned from the container to be discharged to the vacuum cartridge 100 through a first discharge hole 82, and may be connected to the third vacuum tube 73 through a third connecting portion 85 to allow air suctioned from the vacuum cartridge 100 through the first suction hole 84 to be circulated to the vacuum pump, or may be connected to the second vacuum tube 72 through a second connecting portion 83 to allow the vacuum gauge 74 to detect the presence of a vacuum.

Furthermore, the container 20 may be provided with a check valve 65 covering an exhaust hole 55 formed on an upper side of the container 20 and may be hermetically sealed when the noise cover 50 is coupled to the body to surround the container 20.

The check valve 65 may be omitted and, even without the check valve, the vacuum in the container can be released after blending in a vacuum state and upon release of the vacuum in a vacuum decompression unit.

In a vacuum state, an adsorption member 61 is brought into contact with the upper side of the container 20 and the air passes through a trap member 63 after passing through the exhaust hole 55 and the check valve 65.

The air having passed through the trap member 63 may be guided to flow to the first vacuum tube 71.

That is, the trap member 63 may control the flow of air such that the air does not directly flow to the first vacuum tube 71.

Furthermore, the third vacuum tube 73 may be detached from the noise cover 50 upon cleaning.

Furthermore, any or all of the body 10, the noise cover 50, and the vacuum cartridge 100 may be provided with a pressure sensor (not shown) to prevent failure by automatically controlling operation of the motor 11 and the vacuum pump 15 in the event of change in vacuum pressure due to foreign matter.

In addition, when the vacuum pressure rises due to foreign matter, the motor 11 and the vacuum pump 15 may be stopped and an error message (LED color change, LED blinking, beeping, and the like) may be delivered.

Further, when examining the flow of air in a vacuum state, the air having passed through the first vacuum tube 71 passes through the first discharge hole 82 of the air distribution unit 75 and the air having passed through the first discharge hole 82 passes through a second discharge hole 111 formed in the cap 110 of the vacuum cartridge.

Subsequently, foreign matter in the air having passed through the second discharge hole 111 is accumulated on the bottom of the vacuum cartridge 100. Here, a prevention plate 115 is formed to prevent air from directly flowing from the second discharge hole 111 of the cap 110 to the second suction hole 113 while reducing the flow rate and pressure of air.

As a result, clean air flows to the vacuum gauge 74 through the first suction hole 84 of the air distribution unit 75 after passing through the second suction hole 113 formed in the cap 110 of the vacuum cartridge.

In addition, clean air is circulated into the vacuum pump 15 through the third vacuum tube 73 after passing through the second suction hole 113 formed in the cap 110 of the vacuum cartridge and then passing through the third connecting portion 85 of the air distribution unit 75.

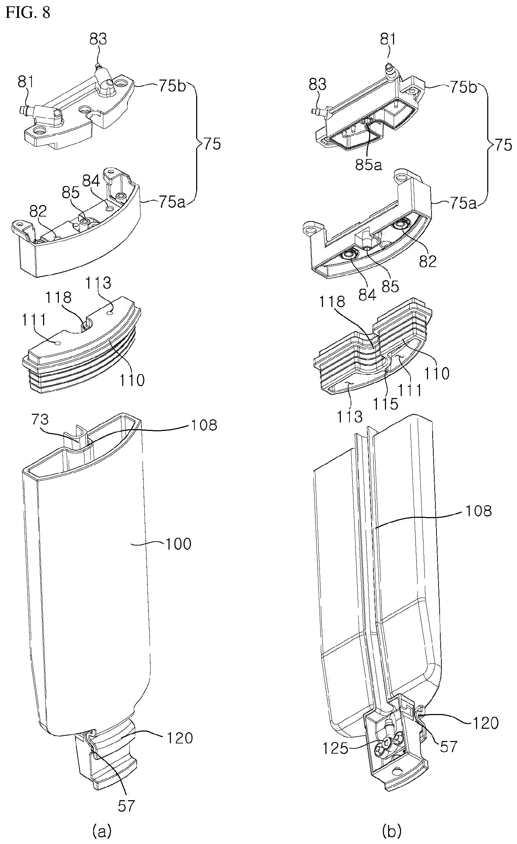

Referring to FIG. 8 to FIG. 11, the cap 110 provided to the upper end of the vacuum cartridge 100 is formed with the second discharge hole 111 connected to the first discharge hole 82 of the air distribution unit 75 and the second suction hole 113 connected to the first suction hole 84 of the air distribution unit 75.

Furthermore, the air distribution unit 75 may be provided with a space for distribution of air to be suctioned or exhausted, and may include a first distribution member 75b having the first connecting portion 81 and the second connecting portion 83 to which the vacuum tubes are connected, and a second distribution member 75a having the first discharge hole 82 and the first suction hole 84, in which the first distribution member 75b is coupled to the second distribution member 75a to allow air distribution.

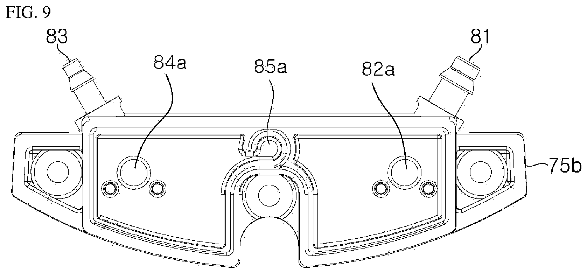

That is, the air distribution unit 75 may be connected to the first vacuum tube 71 through the first connecting portion 81 communicating with a first communication hole 82a of the air distribution unit 75 to allow air suctioned from the container to be discharged to the vacuum cartridge 100 through the first discharge hole 82, as shown in FIG. 9, and may be connected to the third vacuum tube 73 through the third connecting portion 85 communicating with a third communication hole 85a of the air distribution unit 75 to allow air suctioned from the vacuum cartridge 100 through the first suction hole 84 to circulate to the vacuum pump or may be connected to the second vacuum tube 72 through the second connecting portion 83 communicating with a second communication hole 84a of the air distribution unit 75 to allow the vacuum gauge 74 to detect the presence of a vacuum.

That is, the air suctioned through the first suction hole 84 is distributed through the second communication hole 84a or the third communication hole 85a of the air distribution unit 75 to allow the vacuum gauge 74 to detect the presence of a vacuum or to be circulated to the vacuum pump 15.

Here, the prevention plate 115 is disposed between the second discharge hole 111 and the second suction hole 113 of the cap 110 to prevent air from directly flowing from the second discharge hole 111 to the second suction hole 113 of the cap 110 while reducing the flow rate and pressure of air.

As a result, foreign matter contained in the air discharged through the second discharge hole 111 can be received inside the vacuum cartridge 100 and clean air can be suctioned and delivered through the second suction hole 113.

In addition, the vacuum cartridge 100 and the cap 110 disposed on the upper end of the vacuum cartridge 100 are formed with recesses 108, 118 corresponding to the shape of the third vacuum tube 73 such that the third vacuum tube 73 can be received in the recesses 108, 118 and coupled thereto when the vacuum cartridge 100 is coupled to the noise cover 50.

Furthermore, the vacuum cartridge 100 may be formed with a coupling portion 120 to be detachably coupled to a lower end of the noise cover 50 in a latch-hook manner and the noise cover 50 may be provided with a hook portion 57 such that the coupling portion 120 of the vacuum cartridge 100 is caught by the hook portion 57.

Furthermore, the third vacuum tube 73 may be provided at a lower end thereof with a pump tube connecting portion 125 connected to the pump tube 16 such that the third vacuum tube 73 and the pump tube 16 can be automatically connected to each other through the pump tube connecting portion 125 when the vacuum cartridge 100 is coupled to the noise cover 50.

It should be understood that the coupling portion 120 of the vacuum cartridge 100 can be realized in various configurations, such as rail coupling, magnetic coupling, snap coupling, and the like, in addition to the hook manner.

In addition, the vacuum cartridge 100 cannot be coupled to a cartridge compartment of the noise cover 50 when the cap 110 is not provided thereto. Thus, the cap 110 must be coupled to the vacuum cartridge before the vacuum cartridge 100 is coupled to the air distribution unit 75 and the cartridge compartment.

The cap 110 is formed of an elastic material to secure air tightness of the vacuum cartridge 100 while preventing air leakage between the cap 110 and the air distribution unit 75.

In addition, the vacuum cartridge 100 may be separated into multiple pieces for ease of cleaning.

That is, the vacuum cartridge 100 may be separated from the third vacuum tube 73 and may also be separated from the cap 110.

Further, the vacuum cartridge 100 may be provided with a water level sensor (not shown) capable of measuring a water level inside the vacuum cartridge 100.

Furthermore, the vacuum cartridge 100 may be formed of a transparent or translucent material to allow a user to observe the interior of the vacuum cartridge.

When the vacuum cartridge 100 is formed of a transparent or translucent material, the blender allows a user to easily check the amount of foreign matter in the vacuum cartridge even if a water level sensor is not provided.

In the blender according to the present disclosure, the detachable vacuum cartridge is formed on the side surface of the noise cover, thereby simultaneously realizing the function of preventing noise and the function of preventing the vacuum pump from failing or malfunctioning due to foreign matter.

Although some embodiments have been described herein, it should be understood that these embodiments are provided for complete disclosure and thorough understanding of the present disclosure by those skilled in the art and are not to be in any way construed as limiting the present disclosure. In addition, it will be apparent to those skilled in the art that various modifications, changes, and alterations can be made without departing from the spirit and scope of the invention. Therefore, the claims and their equivalents are intended to cover such modifications and the like as would fall within the scope of the invention.

**<List of Reference Numerals>**

| | | | |
|---|---|---|---|
| 10: | Body | 11: | Motor |
| 15: | Vacuum pump | 16: | Pump tube |
| 20: | Container | 29: | Container lid |
| 50: | Noise cover | 55: | Exhaust hole |
| 57: | Hook portion | 60: | Assistant lid |
| 61: | Adsorption member | 63: | Trap member |
| 65: | Check valve | 71: | First vacuum tube |
| 72: | Second vacuum tube | 73: | Third vacuum tube |
| 75: | Air distribution unit | 81: | First connecting portion |
| 82: | First discharge hole | 83: | Second connecting portion |
| 84: | First suction hole | 85: | Third connecting portion |
| 100: | Vacuum cartridge | 110: | Cap |
| 111: | Second discharge hole | 113: | Second suction hole |
| 115: | Protection plate | 125: | Pump tube connecting portion |

## Claims

1. A blender with a vacuum cartridge (100), comprising:
a body (10) provided with a motor (11) for providing drive force and a vacuum pump (15) for suctioning air;
a container (20) detachably coupled to the body (10) and having a blade rotatably mounted thereon;
a noise cover (50) detachably coupled to an upper end of the body (10) and configured to surround the container (20) and to prevent noise, the noise cover (50) being provided with an air distribution unit (75); and
a vacuum cartridge (100) detachably coupled to a side surface of the noise cover (50) and provided at an upper end thereof with a cap (110),
wherein the blender is configured so that air discharged from the container (20) is delivered to the vacuum cartridge (100), foreign matter is delivered to the vacuum cartridge (100) and received therein, and clean air is circulated to the vacuum pump (15).

2. The blender according to claim 1, wherein
the noise cover (50) comprises a first vacuum tube (71), and a third vacuum tube (73);
the air distribution unit (75) is disposed between the noise cover (50) and the vacuum cartridge (100); and
the blender is configured so that air discharged from the container (20) is delivered to the air distribution unit (75) through the first vacuum tube (71) and is then delivered to the vacuum cartridge (100) through a first discharge hole (82) of the air distribution unit (75), foreign matter is then delivered to the vacuum cartridge (100), and clean air is then suctioned through a first suction hole (84) of the air distribution unit (75) and circulated to the vacuum pump (15) through the third vacuum tube (73).

3. The blender according to claim 2, wherein the noise cover (50) further comprises:
a second vacuum tube (72) connected to the first suction hole (84) of the air distribution unit (75); and
a vacuum gauge (74) connected to the second vacuum tube (72) and configured to detect the presence of a vacuum.

4. The blender according to claim 2, wherein
the cap (110) provided to the upper end of the vacuum cartridge (100) is formed with a second discharge hole (111) connected to the first discharge hole (82) of the air distribution unit (75) and a second suction hole (113) connected to the first suction hole (84) of the air distribution unit (75); and
a prevention plate (115) is disposed between the second discharge hole (111) and the second suction hole (113),
the prevention plate (115) being configured to prevent air from directly flowing from the second discharge hole (111) of the cap (110) to the second suction hole (113) thereof while reducing a flow rate and pressure of air.

5. The blender according to claim 2, wherein the vacuum cartridge (100) and the cap (110) provided to the upper end of the vacuum cartridge (100) are formed with a recess (108, 118) corresponding to a shape of the third vacuum tube (73) when coupled to the noise cover (50); and the third vacuum tube (73) is received in the recess (108, 118) to be coupled thereto.

6. The blender according to claim 1, wherein
the vacuum cartridge (100) is formed with a coupling portion (120) to be detachably coupled to a lower end of the noise cover (50) in a latch-hook manner; and
the noise cover (50) is provided with a hook portion (57) by which the coupling portion (120) of the vacuum cartridge (100) is caught.

7. The blender according to claim 1, wherein the vacuum cartridge (100) is formed of a transparent or translucent material to allow a user to observe the interior of the vacuum cartridge (100).

8. The blender according to claim 1, wherein the vacuum cartridge (100) is provided with a water level sensor to measure a water level.

9. The blender according to claim 2, wherein the third vacuum tube (73) is detachable from the noise cover (50) for cleaning.

10. The blender according to claim 2, wherein the third vacuum tube (73) is detachably received in the vacuum cartridge (100) and is detachable from the vacuum cartridge (100) for cleaning.

11. The blender according to claim 1, wherein any or all of the body (10), the noise cover (50), and the vacuum cartridge (100) is provided with a pressure sensor to control operation of the motor (11) and the vacuum pump (15) in response to change in vacuum pressure caused by foreign matter.

12. The blender according to claim 1, wherein the noise cover (50) is provided with a trap member (63) to control air flow such that the air suctioned from the container (20) does not directly flow into the vacuum tube.

13. The blender according to claim 12, wherein the trap member (63) comprises a plurality of ribs to allow the foreign matter to be returned to the container (20) through reduction in flow rate and pressure of air by directing the air flow in at least one direction.
